**Europäisches Patentamt**

**European Patent Office**

**Office européen des brevets**

(19)

(11) Veröffentlichungsnummer: **0 069 917**
**B1**

(12) **EUROPÄISCHE PATENTSCHRIFT**

(45) Veröffentlichungstag der Patentschrift:
02.04.86

(51) Int. Cl.⁴: **B 23 B 31/16**

(21) Anmeldenummer: **82105801.3**

(22) Anmeldetag: **30.06.82**

(54) **Kraftspannfutter für Drehmaschinen.**

(30) Priorität: **11.07.81 DE 3127527**

(43) Veröffentlichungstag der Anmeldung:
**19.01.83 Patentblatt 83/3**

(45) Bekanntmachung des Hinweises auf die Patenterteilung:
**02.04.86 Patentblatt 86/14**

(84) Benannte Vertragsstaaten:
**DE FR GB IT**

(56) Entgegenhaltungen:
**DE - A - 2 611 923**
**DE - A - 2 749 626**
**GB - A - 1 541 011**
**US - A - 4 009 888**
**US - A - 4 047 723**
**US - A - 4 097 053**

(73) Patentinhaber: **SMW Schneider & Weisshaupt GmbH,**
**Wiesentalstrasse 28, D-7996 Meckenbeuren (DE)**

(72) Erfinder: **Hiestand, Karl, Mühlweg 2, D-7798 Pfullendorf**
**(DE)**

(74) Vertreter: **Engelhardt, Guido, Dipl.-Ing.,**
**Montafonstrasse 35 Postfach 1350,**
**D-7990 Friedrichshafen 1 (DE)**

## Beschreibung

Die Erfindung bezieht sich auf ein kraftbetätigtes Spannfutter für Drehmaschinen mit radial verstellbaren Grund- oder Spannbacken, die jeweils durch eine im Futterkörper tangential zur Drehachse geführte Keilstange antreibbar sind, wobei die Keilstangen mittels eines axial verschiebbaren Verstellgliedes betätigbar sind und mit Zahnleisten in eine Verzahnung der Backen eingreifen.

Ein Spannfutter dieser Art, das sich in der Praxis ausserordentlich gut bewährt hat, ist durch die DE-AS 2 556 227 bekannt. Das Verstellglied ist hierbei mit in Richtung der Keilstangen verlaufenden und in deren Verstellrichtung geneigten ebenen oder gekrümmten Keilflächen versehen, die mit an den Keilstangen angebrachten Gegenflächen zusammenwirken. Obwohl dieses Spannfutter nur aus wenigen Teilen besteht und somit störunempfindlich und wirtschaftlich zu fertigen ist, hat es sich doch gezeigt, dass insbesondere bei der Verwendung auf numerisch gesteuerten Werkzeugmaschinen bei hohen Drehzahlen die nach innen gerichtete Spannkraft reduziert wird, da dieser die von den Backen hervorgerufenen nach aussen gerichteten Zentrifugalkräfte entgegenwirken bzw. sich die Kräfte bei einer Innenspannung und somit bei nach aussen gerichteten Spannkräften addieren, da ein Fliehkraftausgleich nicht vorgesehen ist. Des weiteren hat sich gezeigt, dass durch den unmittelbaren Eingriff des Verstellgliedes in die Keilstangen mittels angeformter radial abstehender Ansätze der Durchgang des Spannfutters beeinträchtigt wird. Der Spindeldurchlass kann daher, ohne dass die Führungen der Backen ungünstig beeinflusst werden, bei diesem Spannfutter nicht ohne weiteres gross gestaltet werden.

Es ist daher Aufgabe der Erfindung, ein kraftbetätigtes Spannfutter für Drehmaschinen zu schaffen, dessen Backen mittels eines axial verschiebbaren Verstellgliedes betätigbar sind und das bei geringer axialer Baulänge und hoher Betriebssicherheit nicht nur für hohe Spannkräfte geeignet ist, sondern bei dem mit einfachen Mitteln auch die von den Backen hervorgerufenen Zentrifugalkräfte vollständig auszugleichen sind. Des weiteren soll es trotz geringen Bauaufwandes möglich sein, ohne dass die Führungen der Backen verkürzt werden müssen, einen grossen freien Innendurchmesser vorzusehen, so dass auch im Durchmesser grosse Werkstücke, wie z.B. Bohrrohre, eingespannt werden können.

Gemäss der Erfindung wird dies dadurch erreicht, dass jeder Keilstange ein durch die Zentrifugalkraft radial verstellbares als Schubstange ausgebildetes Zwischenglied zugeordnet ist, das über in Achsrichtung geneigte Schrägflächen, Keilhakenverbindungen oder einen zweiarmigen verschwenkbar im Futterkörper gelagerten Umlenkhebel mit dem Verstellglied in Triebverbindung steht und über ein Keilgetriebe mit der Keilstange derart gekoppelt ist, dass die Verstellbewegungen des Zwischengliedes jeweils in eine gegenläufige Bewegung der Backen umlenkbar ist.

Das Keilgetriebe kann hierbei als ein an den den Keilstangen zugekehrten Stirnseiten der Zwischenglieder angebrachter Ansatz, als eine Verzahnung oder dgl. ausgebildet werden, der in eine in die Keilstangen eingearbeitete Nut eingreift bzw. mit einer Verzahnung zusammenwirkt und entgegengesetzt zu den Zahnleisten der Keilstange geneigt verläuft, es kann aber auch durch ein an den Zwischengliedern an deren radial äusserem Ende angeformten Ansatz gebildet sein, der in Verstellrichtung der Keilstangen geneigt verläuft und in eine in diese eingearbeitete Nut eingreift, wobei die Neigungswinkel der entgegengesetzt verlaufenden Keilgetriebe und Verzahnungen gleich oder, um eine Übersetzung der eingeleiteten Kraft zu bewerkstelligen, unterschiedlich bemessen sein können.

Angebracht ist es ferner, die Zwischenglieder in ihren Massen und/oder das Übersetzungsverhältnis der Keilgetriebe derart zu wählen, dass die von den Backen und den Zwischengliedern hervorgerufenen Zentrifugalkräfte nahezu ausgeglichen sind.

Zur unmittelbaren Betätigung der Backen bzw. zu deren Rückführung ist es nach einer Weiterbildung angebracht, diese an ihren inneren Enden jeweils mit einer in Achsrichtung geneigten Schrägfläche zu versehen, die mit an dem Verstellglied angebrachten, entgegengesetzt zu dessen auf die Zwischenglieder einwirkenden Schrägflächen geneigten Gegenflächen zusammenwirken.

Zur Entkoppelung der Backen können ferner die Keilstangen auf ihren nach aussen gerichteten Flächen jeweils mit einer winkelförmigen Aussparung versehen werden, in die ein mit einem Nocken, einem Exzenter, einem Ansatz oder dgl. versehener Verstellbolzen eingreift.

Das gemäss der Erfindung ausgebildete Kraftspannfutter zeichnet sich nicht nur durch einen geringen Bauaufwand, eine hohe Zuverlässigkeit und Formstabilität aus, sondern durch die als Schubstangen ausgebildeten, von dem Verstellglied betätigbaren Zwischengliedern, die über Keilgetriebe mit den Keilstangen zwangläufig verbunden sind, ist es möglich, die von den Backen hervorgerufenen Zentrifugalkräfte vollständig auszugleichen, da die Zentrifugalkräfte der Schubstangen über die Umlenkglieder an den Backen abgestützt werden. Eine Spannkraftabnahme bei einer nach innen gerichteten Spannkraft, d.h. bei einer Aussenspannung, wie auch eine Spannkrafterhöhung bei einer nach aussen gerichteten Spannkraft und somit bei einer Innenspannung sind somit zuverlässig ausgeschlossen, vielmehr bleibt die Spannkraft unabhängig von der jeweiligen Drehzahl des Spannfutters nahezu konstant, so dass Verformungen und Beschädigungen des eingespannten Werkstückes durch eine zu geringe oder eine zu hohe Spannkraft vermieden sind.

Des weiteren ergibt sich durch die erfindungsgemässe Ausgestaltung ein grosser freier Durchgang des Spannfutters, ohne dass die Führungen der Backen ungünstig beeinflusst werden. Die Schubstangen und die Umlenkglieder sind nämlich weitgehend axial hinter den Backen angeordnet, so dass das Verstellglied im Durchmesser gross gewählt werden kann und somit ein grosser Durchgang verbleibt. Und da die an der Kraftübertragung beteiligten Bauteile ohne weiteres entsprechend stark dimensioniert werden können, sind auch hohe Spannkräfte problemlos zu übertragen.

In der Zeichnung sind einige Ausführungsbeispiele des gemäss der Erfindung ausgebildeten, jeweils mit Schubstangen als Zwischenglieder zur Verstellung der Keilstangen über Keilgetriebe ausgerüsteten kraftbetätigten Spannfutters dargestellt und nachfolgend im einzelnen erläutert. Hierbei zeigen:

Fig. 1 ein Kraftspannfutter, das mit an dem Verstellglied und den Zwischengliedern zu deren Betätigung vorgesehene Schrägflächen aufweist, in einem Axialschnitt,

Fig. 2 das Spannfutter nach Fig. 1 in Vorderansicht und teilweise in einem Schnitt nach der Linie II-II der Fig. 1,

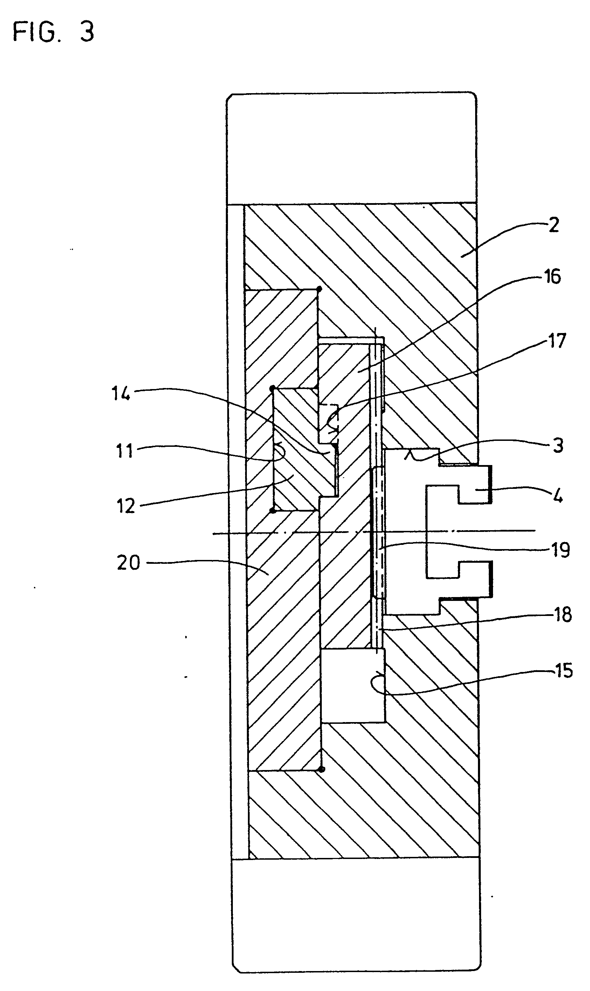

Fig. 3 einen Schnitt nach der Linie III-III der Fig. 2,

Fig. 4 ein Kraftspannfutter, dessen Zwischenglieder über eine Keilhakenverbindung mit dem Verstellglied trieblich verbunden sind, in einem Axialschnitt,

Fig. 5 das Kraftspannfutter nach Fig. 4 in Vorderansicht, teilweise im Schnitt,

Fig. 6 ein Kraftspannfutter mit einem andersartig ausgebildeten Keilgetriebe zur Koppelung der Zwischenglieder mit den Keilstangen, ebenfalls in einem Axialschnitt,

Fig. 7 das Kraftspannfutter nach Fig. 6 in einem Längsschnitt und

Fig. 8 ein Kraftspannfutter mit einem schwenkbar gelagerten Umlenkhebel zur Verbindung des Verstellgliedes mit einem Zwischenglied, ebenfalls in einem Axialschnitt.

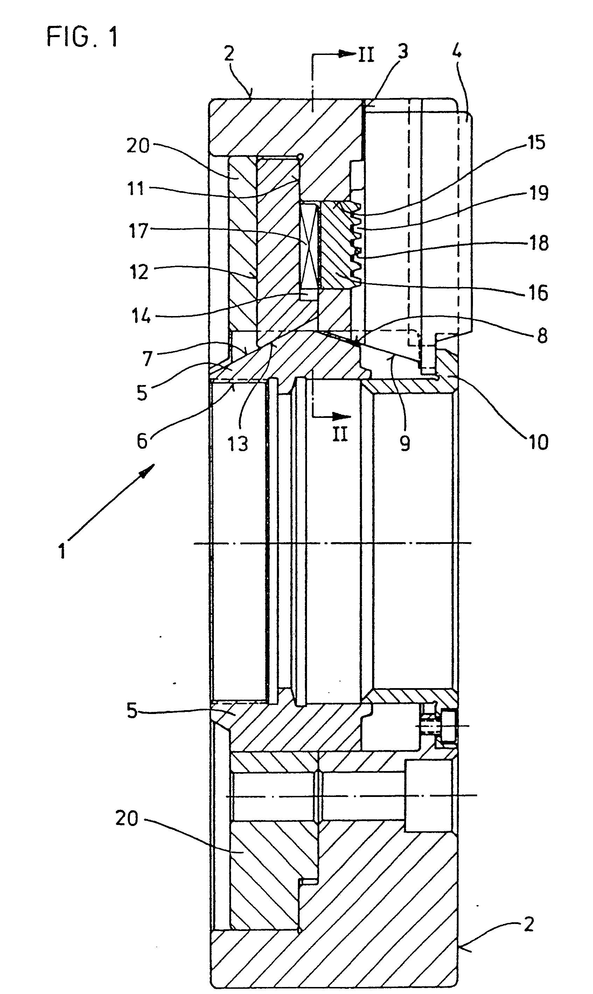

Das in Fig. 1 dargestellte und mit 1 bezeichnete Kraftspannfutter ist mit als Grund- oder Spannbacken ausgebildeten Backen 4 ausgestattet, die radial verschiebbar in den Futterkörper 2 eingearbeiteten Nuten 3 geführt sind. Zur Betätigung der Backen 4 dient ein axial verschiebbares Verstellglied 5, in dessen Gewinde 6 eine nicht dargestellte Zugstange, die mittels eines Spannzylinders verstellbar ist, eingeschraubt wird.

Zur Übertragung und Umlenkung der axialen Verstellbewegung des Spanngliedes 5 auf die Backen 4 dienen in weiteren Nuten 11 des Futterkörpers 2 verschiebbar gehaltene Schubstangen 12 als Zwischenglieder, die jeweils mittels einer Schrägfläche 13 mit einer an dem Verstellglied 5 vorgesehenen Schrägfläche 7 zusammenwirken, sowie tangential zur Drehachse in Ausnehmungen 15 eingesetzte Keilstangen 16, die mit den Schubstangen 12 sowie den Backen 4 trieblich über Keilgetriebe verbunden sind. Dazu ist an den Schubstangen 12 jeweils ein in Verstellrichtung der Keilstangen 16 geneigter Ansatz 14 angebracht, der in eine in die Keilstangen 16 eingearbeitete Nut 17 eingreift. Und die Keilstangen 16 sind des weiteren mit entgegengesetzt zu der Nut 17 geneigten Zahnleisten 18 versehen, die mit einer an den Backen 4 angebrachten Verzahnung 19 zusammenwirken.

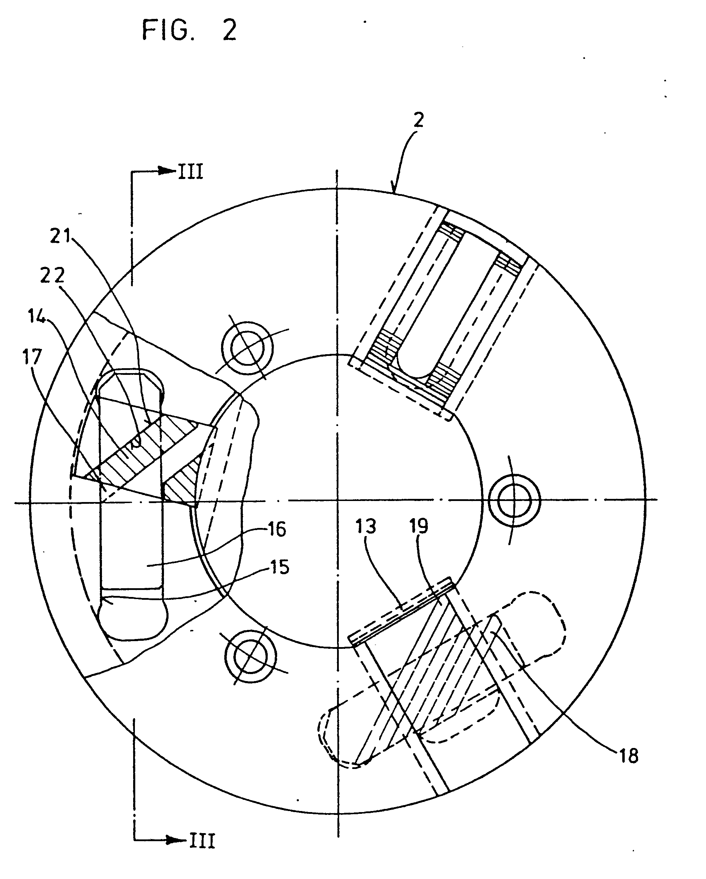

Bei einer Verstellbewegung des in dem Futterkörper 2 und einer in diesen eingesetzten Büchse 10 geführten Verstellgliedes 5 nach rechts werden somit die Schubstangen 12, deren Aufnahmenuten 11 durch einen Deckel 20 abgedeckt sind, radial nach aussen gedrückt und deren Verstellbewegung wird mittels der Keilstangen 16 umgelenkt. Über die Schrägfläche 21 des Ansatzes 14, die mit einer Gegenfläche 22 der Nut 17 zusammenwirkt, werden die Keilstangen 16 bei der Darstellung in Fig. 2 entgegen dem Uhrzeigersinn verschoben. Die Backen 4 dagegen werden radial nach innen gegen ein einzuspannendes Werkstück gedrückt. Durch die Neigung des Ansatzes 14 und der diesen zugeordneten Nut 17 sowie die der Verzahnungen 18 und 19 zueinander kann hierbei die eingeleitete Kraft übersetzt werden.

Bei umlaufendem Spannfutter 1 wird jedoch von den Backen 4 eine Zentrifugalkraft hervorgerufen, die der nach innen gerichteten Spannkraft entgegenwirkt und diese somit mindert. In gleicher Weise treten aber auch an den Schubstangen 12 Zentrifugalkräfte auf, die, da die Schubstangen 12 in radialer Richtung nicht abgestützt sind, mittels der Keilstangen 16 auf die Backen 4 übertragen werden und, da dabei eine Kraftumlenkung vorgenommen wird, den Zentrifugalkräften der Backen 4 entgegenwirken. Selbstverständlich ist es möglich, die Masse der Schubstangen 12 und die Übersetzung der Keilgetriebe, die durch den Ansatz 14 und die Nut 17 sowie die Verzahnungen 18 und 19 gebildet sind, derart zu wählen, dass die Zentrifugalkräfte der Backen vollständig ausgeglichen werden, so dass die aufgebrachten Spannkräfte unabhängig von der Drehzahl des Futterkörpers 2 stets konstant bleiben.

Zur Rückführung der Backen 4 und der mit diesen gekoppelten Schubstangen 12 sind die Backen 4 an ihrem inneren Ende mit einer Schrägfläche 9 ausgestattet, die mit einer an dem Verstellglied 5 angebrachten Gegenfläche 8 zusammenwirkt. Mittels der Flächen 8 und 9 können aber auch die Backen 4, um eine Innenspannung zu bewerkstelligen, unmittelbar betätigt werden. Auch in diesem Fall werden mittels der Schubstangen 12 und der Keilstangen 16 die von den Backen 4 hervorgerufenen Zentrifugalkräfte ausgeglichen, da die von den Schubstangen 12 erzeugten Kräfte mittels Keilstangen 16 umgelenkt werden und somit den Zentrifugalkräften der Backen 4 entgegenwirken. Zur Vermeidung von Verspannungen ist in der gezeigten Betriebsstellung zwischen den Schrägflächen 8 und 9 ein geringes Spiel vorgesehen.

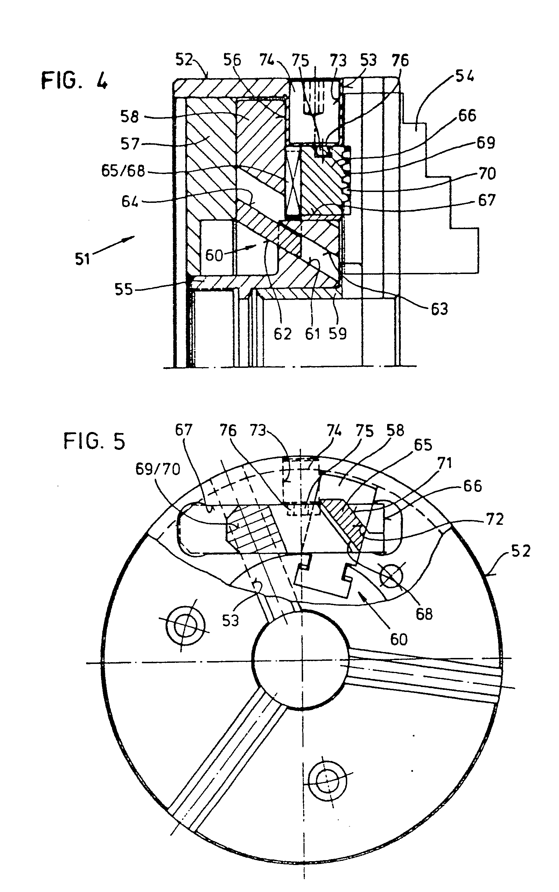

Bei dem Kraftspannfutter 51 nach den Fig. 4 und 5 sind die Backen 54 ebenfalls in radial gerichteten Nuten 53 des Futterkörpers 52 verschiebbar geführt und werden über Schubstangen 58 als Zwischenglieder, die jeweils über eine Keilhakenverbindung 60 mit dem Verstellglied 55 verbunden sind, sowie Keilstangen 66 betätigt. Mittels an dem axial verschiebbar in dem Futterkörper 52 und einer in diesen eingesetzten Büchse 59 geführten Verstellglied 55 angebrachter Schrägflächen 61 werden die in weiteren Nuten 56, die durch einen Deckel 57 abgedeckt sind, angeordneten Schubstangen 58 bei einer Verstellbewegung nach aussen gedrückt. Die Schrägflächen 61 wirken hierbei mit an den Schubstangen 58 angebrachter Gegenflächen 62 zusammen. Durch die Keilhakenverbindung 60 sind an dem Verstellglied 55 und den Schubstangen 58 weitere Schrägflächen 63 und 64 gebildet, mittels denen bei einer Verschiebung des Verstellgliedes 55 nach links die Schubstangen 58 und die mit diesen gekoppelten Backen 54 zurückgeführt werden.

Die zur zwangläufigen Verbindung der Schubstangen 58 mit den Backen 54 vorgesehenen Keilstangen 66 sind wiederum in tangential zur Drehachse verlaufenden Ausnehmungen 67 eingesetzt und an der den Schubstangen 58 zugekehrten Stirnseiten mit einer zur Verstellrichtung geneigten Aufnahmenut 68 versehen, in die jeweils ein an den Schubstangen 58 angebrachter Ansatz 65 eingreift. Die mit 71 und 72 bezeichneten Schrägflächen liegen bei einer Verstellbewegung aneinander an und über die Zahnleisten 69 sowie einer an den Backen 54 vorgesehenen Verzahnung 70 stehen die Keilstangen 66 mit diesen in Triebverbindung.

Um die durch die Backen 54 hervorgerufenen Zentrifugalkräfte ausgleichen zu können, ist zwischen den Schrägflächen 63 und 64 ein geringes Spiel vorgesehen. Die Schubstangen 58 sind somit radial nach aussen weder an dem Futterkörper 52 noch an dem Verstellglied 55 abgestützt. Die durch die Schubstangen 58 hervorgerufenen Zentrifugalkräfte wirken somit ebenfalls über die Zahnstangen 66 auf die Backen 54 ein, allerdings in umgekehrter Richtung wie die durch diese erzeugten Zentrifugalkräfte, so dass diese bei entsprechender Auslegung der Schubstangen 58 und der Keilgetriebe, die durch den Ansatz 65 und die Nut 68 sowie die Verzahnungen 69 und 70 gebildet sind, die Spannkräfte nicht gemindert werden.

Um gegebenenfalls die Backen 54 auszuwechseln, können die Keilstangen 64 bei diesem Ausführungsbeispiel derart weit in der Ausnehmung 67 verschoben werden, dass deren Verzahnung 69 nicht mehr in Eingriff ist mit der Verzahnung 70 der Backen 54. Dazu ist in einer Bohrung 73 des Futterkörpers 52 ein Bolzen 74 angeordnet, der drehbar ist und an seinem inneren Ende einen Ansatz 75 aufweist, und in die Keilstangen 66 sind jeweils eine winkelförmige Aussparung 76 eingearbeitet, in die der Ansatz 75 eingreift. In der Endlage des Verstellgliedes 55 und somit auch am Ende des Spannbereiches der Keilstangen 66 kann der Bolzen 74 gedreht werden, so dass die Keilstangen 66 ausser Eingriff gebracht werden mit der Verzahnung 70 der Backen 54 und diese somit herauszunehmen sind.

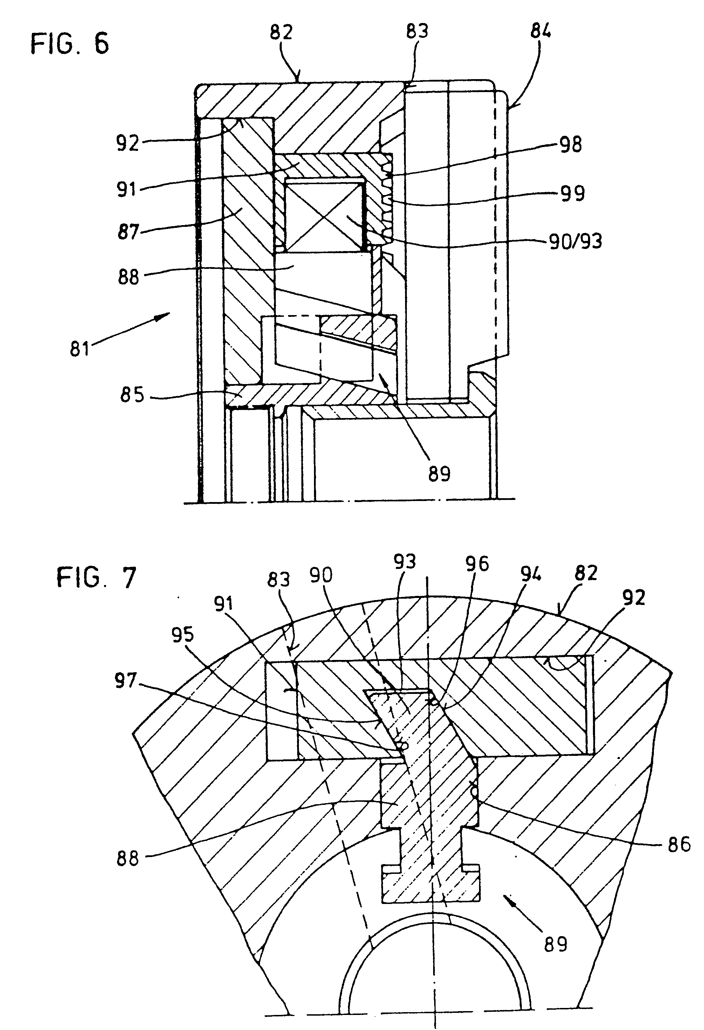

Gemäss den Fig. 6 und 7 ist bei dem Spannfutter 81 zur Übertragung der Verstellbewegungen der als Schubstangen 88 ausgebildeten Zwischenglieder auf die in Nuten 83 des Futterkörpers 82 geführten Backen 84 eine in Verstellrichtung der Keilstangen 91 geneigte, in diese eingearbeitete Nut 93 vorgesehen, in die ein am radial äusseren Ende der Schubstangen 88 angeformter Ansatz 90 eingreift. Die Schrägflächen 94 und 95 des Ansatzes 90 wirken somit mit den Schrägflächen 96 und 97 der Nut 93 zusammen. Über Zahnleisten 98 stehen die Keilstangen 91 mit den Backen 84 in Triebverbindung, an denen dazu eine Verzahnung 99 angebracht ist.

Die Verstellbewegung des Verstellgliedes 85 auf die in durch einen Deckel 87 verschlossenen Nuten 86 geführten Schubstangen 88 erfolgt hierbei über eine Keilhakenverbindung 89, so dass auch eine Rückführung zu bewerkstelligen ist. Und da die Schubstangen 88 radial an den Keilstangen 91 abgestützt sind, werden die auftretenden Zentrifugalkräfte auf die Backen 84 übertragen und somit die von diesen erzeugten Zentrifugalkräfte ausgeglichen.

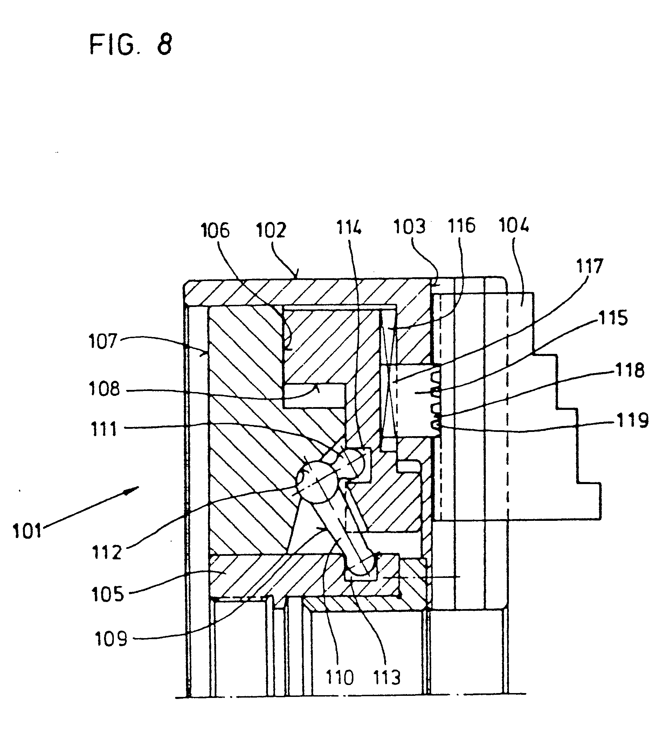

Gemäss Fig. 8 ist bei dem Spannfutter 101 zur Übertragung der axialen Verstellbewegung des Verstellgliedes 105 auf die Schubstangen 108 als Zwischenglieder ein zweiarmiger Umlenkhebel 109 vorgesehen. Mit dem einen Hebelarm 110 greift der in einer Ausnehmung 112 des zweiteiligen Futterkörpers 102, 107 verschwenkbar angeordneter Hebel 109 in eine in das Verstellglied 105 eingearbeitete Ausnehmung 113 ein, mit dem anderen Ende 111 in eine an den Schubstangen 108 vorgesehene Ausnehmung 114.

Durch eine Axialverschiebung des Verstellgliedes 105 nach rechts werden somit die in den Nuten 106 geführten Schubstangen 108 nach aussen gedrückt und die mit diesen über Keilstangen 115 gekoppelten, ebenfalls in Nuten 103 des Futterkörpers 102 gehaltenen Backen 104 werden radial nach innen verschoben, um einen Spannvorgang auszuführen. Die Verstellbewegung der Schubstangen 108 wird hierbei mittels eines an diesen angebrachten Ansatzes 116, der in eine in die Keilstangen 115 eingearbeitete Nut 117 eingreift, auf diese übertragen, die wiederum über Zahnleisten 118 und 119 mit den Backen 104 in Triebverbindung stehen.

Da die Ausnehmungen 114 der Schubstangen 108 einen geringen Freigang aufweisen, werden die durch diese hervorgerufenen Zentrifugalkräfte über die Keilstangen 115 an den Backen 104 abgestützt, so dass die von diesen erzeugten Zentrifugalkräfte somit ausgeglichen werden.

**Patentansprüche**

1. Kraftbetätigtes Spannfutter für Drehmaschinen mit radial verstellbaren Grund- oder Spannbacken (4; 54; 84; 104), die jeweils durch eine im Futterkörper tangential zur Drehachse geführte Keilstange (16; 66; 91; 115) antreibbar sind, wobei die Keilstangen mittels eines axial verschiebbaren Verstellgliedes (5; 55; 85; 105) betätigbar sind und mit Zahnleisten (18; 69; 98; 118) in eine Verzahnung (19; 70; 99; 119) der Bakken (4; 54; 84; 104) eingreifen, dadurch gekennzeichnet, dass jeder Keilstange (16; 66; 91; 115) ein durch die Zentrifugalkraft radial verstellbares als Schubstange ausgebildetes Zwischenglied (12; 58; 88; 108) zugeordnet ist, das über in Achsrichtung geneigte Schrägflächen (7; 33), Keilhakenverbindungen (60; 89) oder einen zweiarmigen verschwenkbar im Futterkörper (102; 107) gelagerten Umlenkhebel (109) mit dem Verstellglied (5; 55; 85; 105) in Triebverbindung steht und über ein Keilgetriebe (14; 17; 65; 68; 90; 93; 117) mit der Keilstange derart gekoppelt ist, dass die Verstellbewegungen des Zwischengliedes jeweils in eine gegenläufige Bewegung der Backen (4; 54; 84; 104) umlenkbar sind.

2. Kraftbetätigtes Spannfutter nach Anspruch 1, dadurch gekennzeichnet, dass das Keilgetriebe als ein an den den Keilstangen (16; 66) zugekehrten Stirnseiten der Zwischenglieder (12; 58) angebrachter Ansatz (14; 65), als eine Verzahnung oder dgl. ausgebildet ist, der in eine in die Keilstangen (16; 66) eingearbeitete Nut (17; 68) eingreift bzw. mit einer Gegenverzahnung zusammenwirkt und entgegengesetzt zu den Zahnleisten (18; 69) der Keilstange (16; 66) verläuft.

3. Kraftbetätigtes Spannfutter nach Anspruch 1, dadurch gekennzeichnet, dass das Keilgetriebe durch einen an den Zwischengliedern (88) an deren radialem äusserem Ende angeformten Ansatz (90) gebildet ist, der in Verstellrichtung der Keilstangen (91) geneigt verläuft und in eine in diese eingearbeitete Nut (93) eingreift.

4. Kraftbetätigtes Spannfutter nach einem oder mehreren der Ansprüche 1 bis 3, dadurch gekennzeichnet, dass die Zwischenglieder (12; 58; 88; 108) in ihren Massen und/der das Übersetzungsverhältnis der Keilgetriebe (14, 17; 65, 58; 90, 93; 116, 117 bzw. 18, 19; 70, 98, 99; 118, 119) derart gewählt sind, dass die von den Backen (4; 54; 84; 104) und den Zwischengliedern hervorgerufenen Zentrifugalkräfte nahezu ausgeglichen sind.

5. Kraftbetätigtes Spannfutter nach einem oder mehreren der Ansprüche 1 bis 4, dadurch gekennzeichnet, dass zur unmittelbaren Betätigung der Backen (4) bzw. zu deren Rückführung diese an ihren inneren Enden jeweils mit einer in Achsrichtung geneigten Schrägfläche (9) versehen sind, die mit an dem Verstellglied (5) angebrachten entgegengesetzt zu dessen auf die Zwischenglieder (12) einwirkenden Schrägflächen (7) geneigten Gegenflächen (8) zusammenwirken.

6. Kraftbetätigtes Spannfutter nach einem oder mehreren der Ansprüche 1 bis 5, dadurch gekennzeichnet, dass zur Entkoppelung der Bakken (54) die Keilstangen (66) auf ihren nach aussen gerichteten Flächen jeweils mit einer winkelförmigen Aussparung (76) versehen sind, in die ein mit einem Nocken, einem Exzenter (75), einem Ansatz oder dgl. versehener Verstellbolzen (74) eingreift.

**Claims**

1. Power chuck for lathes with radially adjustable main or gripping jaws (4; 54; 84; 104) drivable by a wedge rod (16; 66; 91; 115) guided in the chuck body tangentially with regard to the axis of rotation respectively, whereby the wedge rods are operated by means of an axially shiftable adjustment part (5; 55; 85; 105) and gear with toothed racks (18; 69; 98; 118) into a toothing (19; 70; 99; 119) of the jaws (4; 54; 84; 104), characterized in that to each of the wedge rods (16; 66; 91; 115) a medium part (12; 58; 88; 108) designed as a push rod and radially adjustable by centrifugal force is accompanied, which is operably connected to the adjustment part (5; 55; 85; 105) by means of surfaces (7; 33) inclined in the direction of the axis, wedge hook connectors (60; 89) or a two-armed turn back lever swivelly guided in the chuck body (102; 107) and is coupled to the wedge rod in such that the adjustment motions of the medium part are turnable back into an opposite motion of the jaws (4; 54; 84; 104) respectively.

2. Power juck of claim 1, characterized in that the wedge gearing is designed as an extension (14; 65) located at the the medium parts' (12; 58) front faces opposite to the wedge rods (16; 66), a toothing or the like, which extension gears into a groove (17; 68) located in the wedge rods (16; 66) or co-operates with a countergearing respectively and is oriented opposite to the toothed racks (18; 69) of the wedge wedge rod (16; 66).

3. Power juck of claim 1, characterized in that the wedge gearing is formed by an extension (90) located at the medium parts' (88) radial outer end, which extension is inclined in the direction of adjustment of the wedge rods (91) and engages a groove (93) in the wedge rods.

4. Power juck of one or more of the claims 1 through 3, characterized in that the medium parts (12; 58; 88; 108) are designed with respect to their masses and/or the gearing ratio of the wedge gearing (14, 17; 65, 58; 90, 93; 116, 117 or 18, 19; 70, 98, 99; 118, 119 respectively) in such that the centrifugal powers caused by the jaws (4; 54; 84; 104) and the medium parts are nearly compensated.

5. Power juck of one or more of the claims 1 through 4, characterized in that the jaws (4) at their inner ends have a surface (9) inclined in the direction of the axis in order to operate the jaws directly or in order to turn them back respectively, which surfaces co-operate with opposite surfaces (8) mounted to the adjustment part (5) working with inclined surfaces (7) against the medium parts (12).

6. Power juck of one or more of the claims 1 through 5, characterized in that in order to uncouple the jaws (54) the outwardly directed surfaces of the wedge rods (66) are provided with an angle shaped opening (76) which in turn is engaged by an adjustment bolt (74) having a cam, an eccentric (75), an extension or the like.

## Revendications

1. Mandrin de serrage à action mécanique pour tours avec machoires de serrage ou de base ajustables radialement (4; 54; 84; 104) actionnables par une barre cannelée (16; 66; 91; 115) guidée dans le porte-mandrin, tangentiellement par rapport à l'axe de rotation. Ce faisant les barres cannelées sont actionnables au moyen d'un élément de réglage (5; 55; 85; 105) déplacable axialement et sont en prise dans une denture (19; 70; 99; 119) des machoires avec les baguettes dentées, ainsi désigné, de sorte qu'à chaque barre cannelée (16; 66; 91; 115) il est attribué, un élément intermédiaire (12; 58; 88; 108) conçu en tant que tige de poussée réglable à l'aide de la force centrifuge qui se trouve au dessus dans le sens de l'axe des faces chanfreinées appropriées (7; 33) des raccords à crochets à clavette (60; 89), ou un levier d'inversion (109) pivotable à deux bras, logé dans le portemandrin (102; 107), avec l'élément de réglage (5; 55; 85; 105) dans le raccordement de commande et est accouplé avec la barre cannelée à l'aide d'une boîte de coin (14; 17; 65; 68; 90; 93; 117) de telle sorte que les mouvements de réglage de l'élément intermédiaire sont renvoyés dans un mouvement contraire des machoires.

2. Porte-mandrin à action mécanique, selon le droit 1, ainsi désigné, de sorte que la boîte de coin est conçue en tant qu'épaulement (14; 65) sur les faces frontales des éléments intermédiaires (12; 58), adjacent aux barres cannelées (16; 66), comme une denture ou similaire, qui est en prise dans une gorge (17; 68) usinée dans les barres cannelées (16; 66) ou agit avec une contre-denture et se développe à l'opposé des baguettes dentées (18; 69) de la barre cannelée.

3. Porte-mandrin à action mécanique, selon le droit 1, ainsi désigné, de sorte que la boîte de coin est formée par un épaulement adapté aux éléments intermédiaires (88) sur leur extrémité radiale extérieure, qui se développe de façon inclinée dans le sens de réglage des barres cannelées (91) et est en prise dans une gorge (93) usinée dans celle-ci.

4. Mandrin de serrage à action mécanique, selon un ou plusieurs des droits 1 à 3, ainsi désigné, de sorte que les éléments intermédiaires (12; 58; 88; 108) sont choisis, dans leur cotes et rapport de démultiplication de la boîte de coin (14, 17; 65; 58; 90, 93; 116, 117 ou 18, 19; 70, 98, 99; 118, 119), de façon que les forces centrifuges provoquées par les machoires (4; 54; 84; 104) et par les éléments intermédiaires sont presque compensées.

5. Mandrin de serrage à action mécanique, selon un ou plusieurs des droits 1 à 4, ainsi désigné, de sorte que pour l'actionnement immédat des machoires (4) ou leur rappel, ceux-ci sont munis sur leur extrémité interne d'un face chanfreinée (9) inclinée dans le sens de l'axe, qui agissent, sur l'élément de réglage (5) placé à l'opposé sur les contre-brides (8) inclinées par rapport aux surfaces chanfreinées (7) agissant sur les éléments intermédiaires (12).

6. Mandrin de serrage à action mécanique, selon un ou plusieurs des droits 1 à 5, ainsi désigné, de sorte que pour le découplage des machoires (54), les barres cannelées (66) sont munies sur leur faces extérieure d'un évidement en équere (76) dans lequel est en prise le boulon de réglage (74) muni d'une came, d'un excentrique (75), d'un épaulement ou similaire.

FIG. 1

FIG. 2

FIG. 3

0 069 917

FIG. 4

FIG. 5

13

**FIG. 6**

**FIG. 7**

FIG. 8